**Europäisches Patentamt**

**European Patent Office**

**Office européen des brevets**

(19)

(11) Veröffentlichungsnummer : **0 399 209 B1**

(12) # EUROPÄISCHE PATENTSCHRIFT

(45) Veröffentlichungstag der Patentschrift :
**23.12.92 Patentblatt 92/52**

(51) Int. Cl.$^5$ : **C01B 17/22**

(21) Anmeldenummer : **90107315.5**

(22) Anmeldetag : **18.04.90**

(54) **Verfahren zur Herstellung von Natriummonosulfid.**

(30) Priorität : **22.04.89 DE 3913259**

(43) Veröffentlichungstag der Anmeldung :
**28.11.90 Patentblatt 90/48**

(45) Bekanntmachung des Hinweises auf die
Patenterteilung :
**23.12.92 Patentblatt 92/52**

(84) Benannte Vertragsstaaten :
**BE DE ES FR GB IT**

(56) Entgegenhaltungen :
**EP-A- 0 177 671
DE-C- 590 278
GB-A- 2 175 292
CHEMICAL ABSTRACTS, vol. 102, no. 16, April
1985 Columbus, Ohio, USA V.F. Zinchenko et
al.: "Sodium polysulfide." Seite 135;ref. no.
134386 P & SU-A-1129186
Synth. React. Inorg. Met.-Org. Chem. vol. 14,
no. 7, 1984, Seiten 945 - 951; A.P. Brown et al.:
"The direct synthesis ofsodium polysulfides
from sodium and sulfur."**

(73) Patentinhaber : **Degussa Aktiengesellschaft
Weissfrauenstrasse 9
W-6000 Frankfurt am Main 1 (DE)**

(72) Erfinder : **Bittner, Friedrich, Dr.
Mozartstrasse 38
W-6232 Bad Soden (DE)**
Erfinder : **Hinrichs, Walter, Dr.
Alte Bohle 15
W-5040 Brühl (DE)**
Erfinder : **Hippe, Lutz, Dr.
Waldenser Strasse 3
W-6105 Ober-Ramstadt (DE)**
Erfinder : **Lange, Ludwig, Dr.
Mühlenbach 40
W-5040 Brühl (DE)**
Erfinder : **Splett, Erich
Im Bachholz 4
W-5030 Hürth-Berrenrath (DE)**

## Beschreibung

Die Erfindung betrifft ein Verfahren zur Herstellung von Natriummonosulfid durch Umsetzung von Natrium und Schwefel unter Schutzgas.

Natriummonosulfid $Na_2S$ ist ein wichtiges Reagenz zur Einführung von Schwefel in organische Moleküle. Es sind mehrere Verfahren bekannt, nach denen diese Verbindung hergestellt werden kann. Sie ist z. B. erhältlich durch Umsetzung von Natriumsalzen mit Schwefelwasserstoff in wäßrigen oder alkoholischen Lösungen oder durch Reduktion von Natriumsulfat mit Kohlenstoff oder Wasserstoff. Den bekannten Verfahren ist gemeinsam, daß stets mit Reaktionspartnern verunreinigte Produkte anfallen, die durch Lösen in geeigneten Lösungsmitteln und Filtrieren von den Verunreinigungen getrennt werden müssen.

Da die Elemente Natrium und Schwefel äußerst heftig miteinander reagieren
(Bildungsenthalpie für $Na_2S$: $\Delta H_B$ = -389, 1 kJ/Mol)
konnte bislang eine Herstellung direkt aus den auf dem Markt in großer Reinheit erhältlichen Elementen nicht zum technischen Einsatz gelangen.

Wasserfreies $Na_2S$ in ausreichend reiner Form war nur durch Entwässern des Hydrats $Na_2S \cdot 9H_2O$ unter Wasserstoffatmosphäre zugänglich, wobei dieses Hydrat durch Umsetzung von Natriumhydrogensulfid mit NaOH in einem polaren Lösungsmittel hergestellt werden mußte (Kirk-Othmer, 3. Aufl. (1982) Vol. 18, Seiten 793 - 847, insbesondere Seiten 803 und 809).

In der deutschen Patentanmeldung DE-A-38 31 737 (veröffentlicht am 22.03.1990 ; entspricht der EP-A-0361220) ist ein erfahren zur Herstellung von niederen Natriumpolysulfiden und Natrium beschrieben, bei dem man das höhere Natriumpolysulfid unter Schutzgas in schmelzflussiger Form vorlegt und das Natrium in einem dem gewünschten Polysulfidprodukt entsprechenden stöchiometrischen Verhältnis unter kräftigem Rühren der Schmelze in derartigen Mengen zudosiert, daß die Reaktionsmischung im Zustand einer rührfähigen Suspension verbleibt, und das Rühren bis zur vollzogenen Bildung des Produkts fortsetzt. Grundsätzlich wäre es nach diesem Verfahren auch möglich, Natriummonosulfid zu gewinnen, indem man für den gebundenen Schwefel und das Natrium das erforderliche stöchiometrische Verhältnis vorsieht. Da das genannte Verfahren jedoch eine Schmelze als Reaktionsmedium voraussetzt, die zumindest im Endstadium der Umsetzung aus $Na_2S$ allein besteht, würde infolge des sehr hohen Schmelzpunkts dieser Verbindung (1180 - 1200° C) und wegen der starken chemischen Aggressivität der Schmelze kaum ein wirtschaftlich erschwinglicher Reaktorwerkstoff zur Verfügung stehen.

Ebenfalls nur auf die Gewinnung von niedriger schmelzenden Natriumpolysulfiden ist ein in Synth. React. Inorg. Met. -Org. Chem. 14(7). 945 - 951 (1984) referiertes Verfahren gerichtet, welches eine Umsetzung von vorgelegtem schmelzflüssigen Natrium mit zugeführtem Schwefel zum Gegenstand hat, wobei jedoch ein mit Natrium und Stoffen unbekannter Zuzammensetzung verunreinigtes schmelzflüssiges Zwischenprodukt erhalten wird. Dieses muß nach Abtrennung des nicht umgesetzten Natriums in einem separaten Verfahrens schritt zu einem Pulver aufgemahlen und nach Wiederzugabe des vorher abgetrennten Natriums und Zusatz von weiterem Schwefel unter erneutem Aufschmelzen des entstandenen Polysulfids zum Endprodukt weiter verarbeitet werden.

Der Erfindung liegt daher die Aufgabe zugrunde, einen Herstellungsweg zu finden, mit dem sich aus den Elementen Natrium und Schwefel unter Verzicht auf ein in der Reaktion in schmelzflüssiger Form vorliegendes Reaktionsmedium und unter Anwendung relativ niedrig liegender Reaktionstemperaturen hochprozentiges Natriummonosulfid auf wirtschaftliche Weise herstellen läßt.

Diese Aufgabe wird erfindungsgemäß gelöst durch ein Verfahren zur Herstellung von Natriummonosulfid durch Umsetzung von Natrium und Schwefel unter Schutzgas, bei dem man in einer ersten Stufe das gesamte zur Umsetzung bestimmte Natrium vorlegt, dieses auf Temperaturen von 100 - 150° C vorheizt, der Vorlage unter intensivem Mischen, vorzugsweise unter Kneten und/oder Mahlen flüssigen oder festen Schwefel, letzteren vorzugsweise in Form von gebrochener erstarrter Schmelze nach und nach in der erforderlichen Menge zusetzt, wobei die Temperatur des Reaktionsgemisches auf 120 - 250, vorzugsweise 140 - 200° C gehalten wird und in einer zweiten Stufe das gebildete, blauschwarz gefärbte Vorprodukt unter Fortsetzen des Mischens solange bei 250 - 480, vorzugsweise 350 - 400° C nachreagieren läßt, bis unter Hellfärbung ein $Na_2S$-Gehalt von mindestens 95 Gew.% erreicht ist.

Als Schutzgas wird Inertgas, bevorzugt Argon, eingesetzt. Von Bedeutung ist auch hier die Wahl des richtigen Reaktorwerkstoffs. Gemäß einer vorteilhaften Ausführungsform der Erfindung führt man die Umsetzung in einem Reaktor durch, dessen mit dem Reaktionsgemisch in Berührung kommende Teile aus Aluminiumlegierungen, insbesondere $AlMg_3$ oder AlMn oder Sinterkorund oder SiC oder aus Glaskohlenstoff bestehen oder mit diesen Werkstoffen ummantelt bzw. ausgekleidet sind.

Eine besonders wichtige Maßnahme in dem erfindungsgemäßen Verfahren ist die Anwendung solcher Mischeinrichtungen, mit denen das im Verlaufe der Umsetzung verschiedene Konsistenzstufen durchlaufende

EP 0 399 209 B1

Reaktionsgemisch möglichst intensiv zerkleinert und durchmischt werden kann. Besonders brauchbar haben sich Einrichtungen mit Knet- und/oder Mahlwirkung erwiesen. Beispiele sind Trogkneter mit gegenläufigen Knetschaufeln und Rührwerkskugelmühlen.

Bei Knetern sollten die Knetflächen stets vom vorgelegten Natrium (im Ausgangsstadium der Reaktion) bzw. vom gebildeten dunkel bis grau gefärbten Vorprodukt (bei fortschreitender Umsetzung) überdeckt werden, um eine Korrosion durch das aggressive Reaktionsgemisch zu vermeiden.

Der Reaktorinhalt durchläuft bei Durchführung des Verfahrens verschiedene charakteristische Stadien von Konsistenz und Färbung:

Das Ausgangsmaterial besteht in der 1. Verfahrensstufe aus flüssigem, silberfarbenem Natrium von 100 - 150° C.

Bei Einsatz von erstarrter Schwefelschmelze wird diese in Partikel von 10 - 100 mg Gewicht gebrochen und der Bruch in die Vorlage so eindosiert, daß eine Reaktortemperatur von 120 - 250° C, gegebenenfalls unter Außenkühlung, eingehalten werden kann.

Nach Eintrag von ca. 10 % der stöchiometrisch erforderlichen Schwefelmenge hat der Reaktorinhalt eine grießartige Konsistenz und ist dunkelgrau gefärbt.

Nach Eintrag von ca. 25 - 30 % des erforderlichen Schwefels hat der Reaktorinhalt eine puddingartige Konsistenz und ist mittelgrau gefärbt.

Nach Eintrag von ca. 50 % des erforderlichen Schwefels hat der Reaktorinhalt eine krümelige Konsistenz und ist hellgrau gefärbt.

Während des Eintrags des restlichen Schwefels wird der Reaktorinhalt pulverig und verfärbt sich nach dunkel bis blauschwarz.

In der 2. Verfahrensstufe, dem unter fortgesetztem zerkleinerndem Mischen erfolgenden Erhitzen auf 250 - 480° C, bleibt die pulvrige Beschaffenheit des Reaktorinhalts bestehen und es erfolgt ein Farbübergang von blauschwarz nach weiß.

Das erfindungsgemäße Verfahren nimmt, im Unterschied von den eingangs abgehandelten Verfahren zur Herstellung niederer Polysulfide bewußt die Ansammlung von ungeschmolzener Festsubstanz im anfänglich flüssigen Reaktionsmedium in Kauf und bewältigt die Reaktion zwischen den Elementen Natrium und Schwefel mit Umsätzen bis ca. 97 % der Theorie bei Temperaturen, die weit unter dem Schmelzpunkt des Endprodukts ($\sim$ 1200° C) liegen.

Aus dem erhaltenen hochprozentigen Natriummonosulfid läßt sich durch Zusammenschmelzen mit entsprechenden Mengen Schwefel natürlich auch jedes gewünschte Polysulfid erhalten.

Die Erfindung wird nachfolgend anhand eines Ausführungsbeispiels weiter erläutert.

Beispiel

Eine Laborknetmaschine mit einem aus zwei Halbzylindern gebildeten Trog aus V4A mit polierten Innenwänden war mit zwei polierten Schaufeln aus V4A in Sigma-Form, die jeweils auf einer eigenen Antriebswelle montiert waren, ausgerüstet.

Der Trogunterteil besaß einen Doppelmantel zur Aufnahme eines Wärmeträgermediums. Der aufgeschraubte Deckel aus V4A war mit einem Stutzen, der mit einer Schraubkappe verschlossen werden konnte, und einem unmittelbar unter dem Deckel endenden Einleitungsrohr für das Schutzgas Argon versehen. Durch den Stutzen wurden sowohl Natrium und Schwefel eingefüllt, als auch das Vorprodukt entnommen.

Die Schaufeldrehzahl konnte variiert werden zwischen 40 - 60 Upm. Durch eine der vier Seitenwände war parallel zu den Wellen, auf denen die Schaufeln montiert waren, ein Temperaturfühlerschutzrohr aus V4A in den Trog bzw. Reaktionsraum eingeführt. Die lichte Länge des Troges betrug 100 mm, seine lichte Breite 117 mm und seine lichte Tiefe 110 mm. Das Nutzvolumen dieses Trogs war 750 ml. Dementsprechend konnte dieser Trog ca. 500 g Vorprodukt aufnehmen.

Vor Beginn der chargenweisen Produktion wurde der Trog aufgeheizt, wobei dessen Unterteil mit Wärmeträgeröl mit einer Temperatur von 160° C beaufschlagt wurde. Mit ca. 20 l Argon pro Stunde wurde der Trog gespült. Danach wurden 176,9 g flüssiges Natrium eingefüllt.

Durch den mit einer Schraubkappe verschließbaren Stutzen wurde Schwefel in kleinen Brocken aus erstarrter Schmelze in das flüssige Natrium dosiert. Am Anfang betrug die Schwefelmenge pro Portion ca. 100 mg. Im Verlauf der Reaktion wurde sie auf ca. 1 g pro Portion gesteigert.

Die Dosierung des Schwefels wurde so gesteuert, daß die Temperatur im Reaktionsraum nicht höher als 160° C stieg. Die Temperatur des Wärmeträgeröls wurde auf 150°C abgesenkt.

Während der portionsweisen Zugabe von insgesamt 123,1 g Schwefel über einen Zeitraum von ca. 3,5 h blieb die Schaufeldrehzahl konstant bei 50 Upm. Nach Zugabe von etwa 40 g Schwefel verdickte das Reaktionsgemisch zusehends und quoll auf. Das Reaktionsgemisch behielt diese Konsistenz bei bis kurz vor Ende

3

der Schwefeldosierung. Nachdem ca. 110 g Schwefel in die Reaktionsmischung eingebracht waren, wurde die Mischung trocken und nahm bei Zugabe der restlichen, stöchiometrisch erforderlichen Schwefelmenge eine blauschwarze Färbung an. Nach Abkühlen des Vorprodukts wurde eine Probe entnommen.

Die Analyse ergab:

58,7 Gew.% Gesamtnatrium (theoret. 59,0 %)

41,3 Gew.% Gesamtschwefel (theoret. 41,0 %)

Von dem Gesamtschwefel liegt im Vorprodukt 37,2 % Schwefel in Form des Sulfids vor. Die Sulfidbestimmung erfolgte jodometrisch. Der Gesamtschwefelgehalt wurde nach Oxidation des Schwefels mit $H_2O_2$ im alkalischen Medium zum Sulfat gravimetrisch als $BaSO_4$ bestimmt.

Der Gesamtnatriumgehalt wurde flammenphotometrisch ermittelt. Natrium, das nicht an der Reaktion teilgenommen hatte, wurde gasvolumetrisch erfaßt.

Hierbei wurde ein Anteil von 2 Gew.%, bezogen auf die Reaktionsmischung, gefunden. Das Vorprodukt, das mehr als 90 Gew.% Natriummonosulfid enthielt, wurde zur Nachreaktion der noch nicht zum Sulfid reagierten Bestandteile Natrium und Schwefel in einen Laborreaktor eingebracht, der bis ca. 400° C hochgeheizt werden konnte.

Der zylindrische Laborreaktor aus der Aluminiumlegierung AlMg3 mit ebener Bodenplatte hatte einen aufgeflanschten Deckel ebenfalls aus AlMg3 mit einem durch Schraubkappe verschließbaren Stutzen, einem unter dem Deckel endenden Einleitungsrohr für das Schutzgar Argon, einem Temperaturfühlerschutzrohr und einer Stopfbuchse im Deckel zur Durchführung der mit AlMg3 umkleideten, vertikal stehenden Flügelrührerwelle, auf der die Rührblätter aus AlMg3 befestigt waren. Der Reaktor hatte eine lichte Höhe von 150 mm und eine lichte Weite von ebenfalls 150 mm.

Um eine optimale Rührwirkung im Laborreaktor zu erreichen, mußte die Menge von 300 g Vorprodukt verdoppelt werden. Daher wurde die gleiche Menge in der eben beschriebenen Art und Weise in der Laborknetmaschine noch einmal hergestellt.

Nach Einfüllen von 600 g des schwarzen pulverförmigen Vorprodukts aus den 2 Ansätzen wurde der am Mantel mit einer Wärmedämmung versehene Reaktor auf eine stufenlos heizbare elektrische Platte gesetzt und im Verlauf von 1,5 h gleichmäßig auf 370° C hochgeheizt. Während des Aufheizens wurde das Vorprodukt intensiv gerührt. Die Drehzahl des Rührers wurde auf 100 Upm eingestellt.

Hierzu war ein starker Rührmotor erforderlich, da das Vorprodukt ab 300° C zum Verklumpen neigt. Mit einem Inertgasstrom von 30 l pro Stunde wurde der Reaktor während des Aufheizens bzw. der Nachreaktion gespült.

Nach dem Abkühlen wurde das nunmehr weiße Endprodukt dem Reaktor entnommen und gesiebt. Die Maschenweite des Siebes betrug 0,355 mm. Etwa 75 % des durchgesiebten Reaktionsprodukts wurde dabei als homogenes weißes Pulver gewonnen.

Die Analyse ergab folgende Zusammensetzung:

59,0 Gew.% Na (theoret. 58,97 Gew.%)

41,0 Gew.% S (theoret. 41,03 Gew. %)

Die grobkörnige Fraktion (Siebrückstand) hatte die Zusammensetzung $Na_2S$; hinsichtlich des Schwefelgehalts der einzelnen Körner war sie jedoch inhomogen, d. h. die Körner enthielten zum Teil geringe Mengen Polysulfid (ca. 1 - 5 Gew. %).

Aus dem eben Beschriebenen ergibt sich folgende Mengenbilanz:

```
Natrium-Vorlage im Kneter (insgesamt):      353,8 g

Schwefelzugabe (insgesamt):                 246,2 g

Produktion an Vorprodukt:                   600 g

Vorlage im Laborreaktor:                    600 g Vorprod.

Entnahme aus Laborreaktor:                  600 g Endprod.


Siebfraktion < 0,355 mm:    450,0 g Na₂S;


Rest an inhomogener Kornfraktion > 0,355 mm:    150 g
```

Die inhomogene Kornfraktion > 0,355 mm aus dem Verfahren zur Herstellung von $Na_2S$ wurde gesammelt

und dem Kneter für die erste Umsetzungsstufe zugeführt. Nach einer Stunde Mahlen bei 50 Upm unter Argonatmosphäre wurde ein feinteiliges Pulver erhalten, das als Vorlage im Kneter für einen neuen Ansatz verwendbar ist.

## Patentansprüche

1. Verfahren zur Herstellung von Natriummonosulfid durch Umsetzung von Natrium und Schwefel unter Schutzgas,
   **dadurch gekennzeichnet,**
   daß man in einer ersten Stufe das gesamte zur Umsetzung bestimmte Natrium vorlegt, dieses auf Temperaturen von 100 - 150° C vorheizt, der Vorlage unter intensivem Mischen, vorzugsweise unter Kneten und/oder Mahlen, flüssigen oder festen Schwefel, letzteren vorzugsweise in Form von gebrochener erstarrter Schmelze, nach und nach in der erforderlichen Menge zusetzt, wobei die Temperatur des Reaktionsgemisches auf 120 - 250, vorzugsweise 140 - 200° C gehalten wird und in einer zweiten Stufe das gebildete, blauschwarz gefärbte Vorprodukt unter Fortsetzen des Mischens solange bei 250 - 480, vorzugsweise 350 - 400° C nachreagieren läßt, bis unter Hellfärbung ein Na$_2$S-Gehalt von mindestens 95 Gew.% erreicht ist.

## Claims

1. A process for the production of sodium monosulfide by reaction of sodium and sulfur in an inert gas atmosphere, characterized in that, in a first stage, all the sodium intended for the reaction is introduced and preheated to 100 to 150°C, liquid or solid sulfur - the solid sulfur preferably in the form of broken solidified melt - is gradually added in the necessary quantity with intensive mixing, preferably with kneading and/or grinding, the temperature of the reaction mixture being kept at 120 to 250°C and preferably at 140 to 200°C, and in a second stage the blue-black coloured intermediate product formed is left to after-react with continued mixing at 250 to 480°C and preferably at 350 to 400°C until an Na$_2$S content of at least 95% by weight is reached with lightening of the colour.

## Revendications

1. Procédé d'obtention de monosulfure de sodium par réaction du sodium et du soufre sous gaz protecteur caractérisé en ce que l'on introduit dans une première étape la totalité du sodium déterminé pour la réaction, que l'on chauffe au préalable à des températures de 100 à 150°C, que l'on ajoute peu à peu dans la quantité requise du soufre liquide ou solide. Ce dernier de préférence sous forme de produit de fusion solidifié en morceaux, au produit introduit sous agitation intense - de préférence en malaxant et/ou moulant, procédé dans lequel la température du mélange réactionnel est maintenue à 120-250°C - de préférence à 140-200°C - et que dans une seconde étape on laisse réagir finalement le produit précurseur formé, coloré en bleu-noir tout en poursuivant le mélange aussi longtemps à 250-480°C - de préférence 350-400°C jusqu'à ce qu'une teneur en Na$_2$S de 95% en poids au moins, soit atteinte avec obtention d'une coloration claire.